# FASCICULE DE BREVET EUROPEEN

(11) **EP 3 139 540 B1**
(45) Date de publication et mention de la délivrance du brevet: **04.07.2018**
(21) Numéro de dépôt: 16185245.4
(22) Date de dépôt: 23.08.2016
(51) Int. Cl.: H04L 12/933, H04L 12/24

(54) **PROCÉDÉ DE DÉTERMINATION AUTOMATISÉE DE TOPOLOGIES D'INTERCONNEXION OPTIMALES DE SYSTÈMES COMPRENANT DES NOEUDS DE SERVICE, ET DISPOSITIF DE TRAITEMENT ASSOCIÉ**
VERFAHREN ZUR AUTOMATISIERTEN BESTIMMUNG DER OPTIMALEN VERBINDUNGSTOPOLOGIEN VON SYSTEMEN, DIE SERVICE-KNOTEN UMFASSEN, SOWIE ENTSPRECHENDE DATENVERARBEITUNGSVORRICHTUNG
METHOD FOR AUTOMATED DETERMINATION OF OPTIMAL INTERCONNECT TOPOLOGIES OF SYSTEMS INCLUDING SERVICE NODES, AND ASSOCIATED PROCESSING DEVICE

(30) Priorité: 02.09.2015 FR 1558131
(43) Date de publication de la demande: 08.03.2017
(73) Titulaire: BULL SAS, 78340 Les Clayes sous Bois (FR)
(72) Inventeur: VIGNERAS, Pierre, 91470 Angervilliers (FR); REMY, Kévin, 77100 Meaux (FR)
(74) Mandataire: Cabinet Camus Lebkiri

(56) Documents cités:
- US-A1- 2013 108 263
- US-A1- 2014 023 084
- US-B2- 9 124 483
- HAITAO WU ET AL: "MDCube", CONEXT '09 PROCEEDINGS OF THE 5TH INTERNATIONAL CONFERENCE ON EMERGING NETWORKING EXPERIMENTS AND TECHNOLOGIES; DECEMBER 1 - 4, 2009; ROME, ITALY, 1 janvier 2009 (2009-01-01), page 25, XP055258840, New York, NY, USA. DOI: 10.1145/1658939.1658943 ISBN: 978-1-60558-636-6

## Description

L'invention concerne les systèmes comprenant des noeuds de service interconnectés entre eux via des liaisons, et plus précisément la détermination de topologies d'interconnexion de tels systèmes.

On entend ici par « noeud de service » un équipement électronique comprenant des ressources pouvant être de tout type dès lors qu'elles assurent au moins un service configurable utile au système auquel elles appartiennent ou à une application tournant dans ce système. Par conséquent, il pourra par exemple s'agir d'un équipement de calcul comprenant au moins un processeur, ou d'un équipement d'entrée/sortie, ou d'un routeur (ou « switch »), ou encore de moyens de stockage de données.

Par ailleurs, on entend ici par « topologie d'interconnexion » l'architecture (ou le réseau d'interconnexion) définissant l'intégralité des liaisons (ou interconnexions) entre tous les noeuds de service d'un système. Il s'agit d'un graphe non orienté où les sommets représentent, par exemple, des routeurs et les arcs représentent les liaisons (ou câbles). On notera qu'il existe plusieurs structures de topologie, et notamment celles dites hiérarchiques, celles en anneau (à topologie directe), et celles à maillage. Parmi les structures hiérarchiques, on peut notamment citer celles appelées en anglais « Fat tree », « Generalized Fat Tree » (ou GFT), « Extended Generalized Fat Tree » (ou XGFT), et « Parallel Generalized Fat Tree » (ou PGFT). Parmi les structures à maillage, on peut notamment citer celle appelée en anglais « HyperX ».

Compte tenu des deux définitions qui précèdent, un système pourra être notamment un calculateur de type dit « haute performance » (ou supercalculateur), ou un centre de données (ou « data center »).

La détermination (ou le dimensionnement) de la topologie d'interconnexion d'un système, comme par exemple un supercalculateur, est une tâche complexe en raison des très nombreuses contraintes qui doivent être priseS en compte, et notamment le niveau de performance, le coût, la faisabilité technique, les contraintes logistiques (et notamment l'encombrement), et les contraintes thermiques.

En raison de cette complexité, la détermination (ou le dimensionnement) de la topologie d'interconnexion d'un système est fréquemment réalisée à la main après que la structure de cette topologie d'interconnexion ait été choisie, ce qui induit plusieurs inconvénients. En effet, la topologie d'interconnexion déterminée est rarement optimale sur tous les plans, voire infaisable techniquement, et donc on est contraint de réaliser de nombreuses modifications qui induisent fréquemment un surcoût important et/ou d'éventuels retards de mise à disposition du client et/ou une éventuelle diminution du niveau de performance souhaité initialement. De la demande de brevet publiée sous la référence US2014/0023084, il est connu un outil informatique, de type « web », développé par la société Mellanox, et destiné à déterminer (ou dimensionner) des topologies d'interconnexion. Cet outil est adapté aux structures de type Fat Tree, et permet de choisir le nombre de noeuds de calcul ainsi que le type de routeur à utiliser sur les deux premiers niveaux de la topologie d'interconnexion, et le facteur de blocage. Le principal inconvénient de cet outil réside dans le fait qu'il ne fournit que le nombre de routeurs et de liaisons nécessaires à la mise en place du système, et donc ne donne aucune information sur la configuration topologique (comme une description formelle, par exemple), ce qui est pourtant indispensable à l'évaluation de la qualité de la topologie en termes de routage et de rapport qualité/prix.

L'invention a donc notamment pour but d'améliorer la situation.

Elle propose notamment à cet effet un procédé, destiné à permettre la détermination d'une topologie d'interconnexion optimale d'un système comprenant des noeuds de service interconnectés entre eux via des liaisons et constituant pour certains des routeurs ayant des ports et appartenant à au moins un niveau.

Ce procédé se caractérise par le fait qu'il comprend :
- une première étape dans laquelle on choisit une structure pour une topologie d'interconnexion optimale à déterminer parmi un ensemble de structures définies chacune par au moins une contrainte structurelle, puis on choisit au moins un paramètre de topologie parmi un nombre maximal de ports des routeurs, un nombre de niveaux de routeurs, un nombre de noeuds de service connectés à un routeur appartenant au premier niveau, un nombre de noeuds de service d'un niveau i-1 connectés à un même routeur d'un niveau i, un nombre de routeurs d'un niveau i connectés à un même noeud de service d'un niveau i-1, un nombre de liaisons (ou liens) entre un routeur d'un niveau i et un noeud de service d'un niveau i -1, et
- une seconde étape dans laquelle on détermine au moyen d'un solveur la topologie d'interconnexion optimale en fonction d'au moins chaque contrainte structurelle correspondante et chaque paramètre de topologie choisi et d'au moins un critère d'optimisation choisi.

Ainsi, on peut désormais déterminer des topologies d'interconnexion optimales de différentes structures, et faisables techniquement, c'est-à-dire correspondant aux demandes des clients sans nécessiter de nombreuses modifications lors de leur mise en place.

Le procédé selon l'invention peut comporter d'autres caractéristiques qui peuvent être prises séparément ou en combinaison, et notamment :
- chaque critère d'optimisation peut être choisi parmi (au moins) un coût du système, un niveau de performance, une extensibilité du système, une consommation d'énergie du système, des contraintes thermiques, et un encombrement du système ;
- chaque contrainte structurelle peut être choisie parmi (au moins) les inéquations suivantes : pᵢ*mᵢ + pᵢ₊₁*Wᵢ₊₁ ≤ radixMax, pₕ*mₕ ≤ radixMax, et w₁*p₁ + noeudsParFeuille ≤ radixMax, où mi est le nombre de noeuds de service d'un niveau i-1 connectés à un même routeur d'un niveau i, wᵢ est le nombre de routeurs d'un niveau i connectés à un même noeud de service d'un niveau i-1, pi est le nombre de liaisons (ou liens) entre un routeur d'un niveau i et un noeud de service d'un niveau i -1, radixMax est le nombre maximal de ports de chaque routeur, h est le nombre de niveaux de routeurs, et noeudsParFeuille est le nombre de noeuds de service connectés à un même routeur appartenant au premier niveau ;
- dans la seconde étape on peut déterminer la topologie d'interconnexion optimale en fonction également d'au moins une contrainte d'utilisation choisie ;
   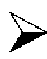 chaque contrainte d'utilisation peut être choisie parmi (au moins) une interdiction de connecter à un routeur appartenant à un niveau i donné plus de liaisons (ou liens) vers le niveau supérieur à ce niveau donné que de liaisons (ou liens) vers le niveau inférieur à ce niveau donné, une conservation d'une bande passante en entrée et en sortie de chaque routeur, une non conservation d'une bande passante en entrée et en sortie de chaque routeur, un nombre minimum de noeuds de service, un nombre maximum de liaisons (ou liens) entre deux routeurs ;
- le système peut être choisi parmi (au moins) un supercalculateur et un centre de données (ou « data center »).

L'invention propose également un produit programme d'ordinateur comprenant un jeu d'instructions qui, lorsqu'il est exécuté par des moyens de traitement, est propre à mettre en oeuvre un procédé du type de celui présenté ci-avant pour déterminer une topologie d'interconnexion optimale d'un système comprenant des noeuds de service interconnectés entre eux via des liaisons et constituant pour certains des routeurs ayant des ports et appartenant à au moins un niveau.

L'invention propose également un dispositif de traitement, destiné à déterminer une topologie d'interconnexion optimale d'un système comprenant des noeuds de service interconnectés entre eux via des liaisons et constituant pour certains des routeurs ayant des ports et appartenant à au moins un niveau, et propre à équiper un équipement électronique comprenant des ressources de calcul et une interface homme/machine.

Ce dispositif de traitement se caractérise par le fait qu'il comprend :
- une interface de programmation agencée pour permettre à un usager de choisir via l'interface homme/machine une structure pour une topologie d'interconnexion optimale à déterminer parmi un ensemble de structures définies chacune par au moins une contrainte structurelle, et au moins un paramètre de topologie choisi parmi un nombre maximal de ports des routeurs, un nombre de niveaux de routeurs, un nombre de noeuds de service connectés à un routeur appartenant au premier niveau, un nombre de noeuds de service d'un niveau i-1 connectés à un même routeur d'un niveau i, un nombre de routeurs d'un niveau i connectés à un même noeud de service d'un niveau i-1, un nombre de liaisons (ou liens) entre un routeur d'un niveau i et un noeud de service d'un niveau i -1, et
- des moyens de résolution agencés pour déterminer la topologie d'interconnexion optimale en fonction d'au moins chaque contrainte structurelle correspondante et chaque paramètre de topologie choisi et d'au moins un critère d'optimisation choisi.

L'invention propose également un équipement électronique comprenant des ressources de calcul, une interface homme/machine, et un dispositif de traitement du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique et fonctionnelle un ordinateur équipé d'un exemple de réalisation d'un dispositif de traitement selon l'invention,
- la figure 2 illustre un exemple d'algorithme mettant en oeuvre un procédé de détermination selon l'invention, et
- la figure 3 illustre de façon schématique un exemple de topologie d'interconnexion optimisée, déterminé au moyen d'un procédé de détermination selon l'invention avec certains paramètres de topologie.

L'invention a notamment pour objet de proposer un procédé de détermination, et un dispositif de traitement DT associé, destinés à permettre la détermination d'une topologie d'interconnexion optimale d'un système S comprenant des noeuds de service Nᵢⱼ.

Dans ce qui suit, on considère, à titre d'exemple non limitatif, que le système S est un calculateur haute performance (ou supercalculateur). Mais l'invention n'est pas limitée à ce type de système. Elle concerne en effet tout système comprenant des noeuds de service interconnectés entre eux via des liaisons et constituant pour certains des routeurs ayant des ports et appartenant à au moins un niveau, et notamment les centres de données (ou data centers).

Comme indiqué plus haut, l'invention propose un procédé destiné à permettre la détermination d'une topologie d'interconnexion optimale d'un système S (ici un supercalculateur) comprenant des noeuds de service Nᵢⱼ interconnectés entre eux via des liaisons et constituant pour certains des routeurs ayant des ports et appartenant à au moins un niveau.

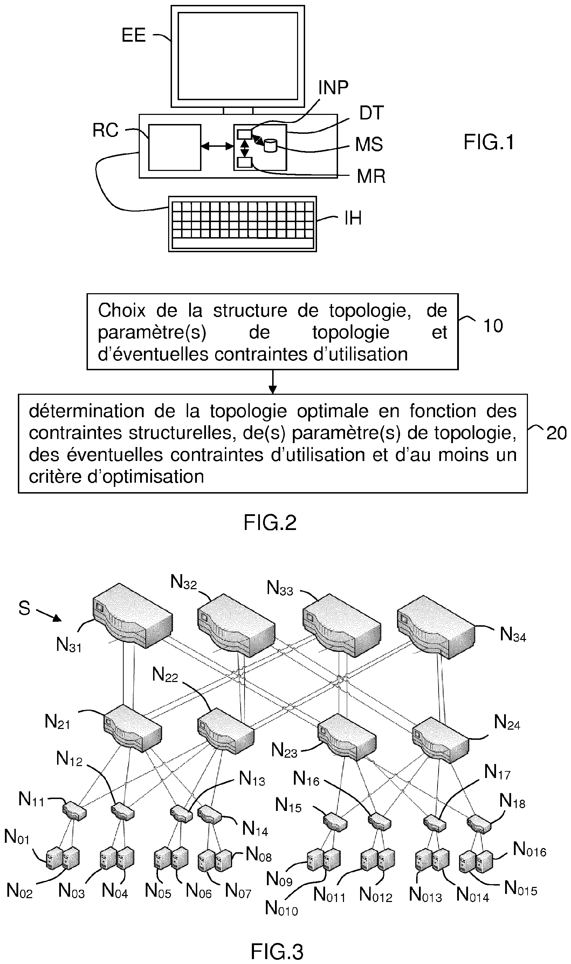

Ce procédé comprend des première et seconde étapes, référencées respectivement 10 et 20 dans l'exemple d'algorithme de la figure 2, et pouvant être mises en oeuvre par un dispositif de traitement DT selon l'invention.

Comme illustré sur la figure 1, un dispositif de traitement DT, selon l'invention, comprend au moins une interface de programmation INP et des moyens de résolution MR.

Par exemple, l'interface de programmation INP peut être de type API (« Application Programming Interface »). A titre d'exemple non limitatif, elle peut être réalisée à partir d'une librairie python, telle que celle appelée Pyomo. Il est rappelé que Pyomo est une librairie python permettant de générer, dans un format particulier (.nl) supporté par beaucoup de programmes de résolution d'équations, des systèmes d'équations préalablement déclarés et instanciés au moyen d'une API.

Dans l'exemple non limitatif illustré sur la figure 1, le dispositif de traitement DT est installé dans un équipement électronique EE agencé sous la forme d'un ordinateur et donc disposant notamment d'une interface homme/machine IH (ici un clavier et un écran d'affichage) et de ressources de calcul RC. Mais cela n'est pas obligatoire. Le dispositif de traitement DT pourrait en effet être un équipement électronique disposant d'une interface homme/machine IH et de ressources de calcul RC. Ainsi, il pourrait s'agir d'un ordinateur portable ou d'une tablette électronique, par exemple. Par ailleurs, dans une variante de réalisation non illustrée, le dispositif de traitement DT pourrait être installé dans un équipement électronique EE agencé sous une autre forme qu'un ordinateur, et notamment sous la forme d'un ordinateur portable ou d'une tablette électronique. Par conséquent, le dispositif de traitement DT peut être réalisé soit sous la forme de modules logiciels (ou informatiques, ou encore « software ») ; on est alors en présence d'un produit programme d'ordinateur comprenant un jeu d'instructions qui, lorsqu'il est exécuté par des moyens de traitement de type circuits électroniques (ou « hardware »), est propre à mettre en oeuvre le procédé de détermination, soit sous la forme d'une combinaison de modules logiciels et de circuits électroniques.

Durant la première étape 10 du procédé selon l'invention, on (un usager de l'équipement électronique EE) commence par choisir, parmi un ensemble de structures définies chacune par au moins une contrainte structurelle, et au moyen de l'interface homme/machine IH, une structure pour une topologie d'interconnexion optimale devant être déterminée pour un système S. L'ensemble de structures est fourni par l'interface de programmation INP du dispositif de traitement DT. Par exemple, cet ensemble peut comprendre au moins une structure de type hiérarchique (comme par exemple Fat tree ou Generalized Fat Tree (ou GFT) ou Extended Generalized Fat Tree (ou XGFT) ou encore Parallel Generalized Fat Tree (ou PGFT)) et/ou au moins une structure en anneau et/ou une structure à maillage (comme par exemple HyperX).

Par exemple, les structures hiérarchiques peuvent être définies chacune par au moins une contrainte structurelle fonction d'au moins deux variables mi et wi, et parfois également d'une troisième variable pi, où l'indice i indexe le niveau auquel appartient un routeur au sein de la structure. mᵢ est le nombre de noeuds de service Nᵢ₋₁ⱼ d'un niveau i-1 connectés à un même routeur Nᵢⱼ d'un niveau i. wᵢ est le nombre de routeurs Nᵢⱼ d'un niveau i connectés à un même noeud de service Nᵢ₋₁ⱼ d'un niveau i-1. pi est le nombre de liaisons (ou liens) entre un routeur Nᵢⱼ d'un niveau i et un noeud de service Nᵢ₋₁ⱼ d'un niveau i -1. Ces variables m, w et p sont des vecteurs de dimension h. Avec le choix fait ci-dessus pour l'indexage, la valeur i = 0 est attribuée au niveau contenant les noeuds de service N₀ⱼ qui sont connectés à des routeurs N₁ⱼ (dits feuilles) du premier niveau (i = 1).

Ainsi, un GFT (Generalized Fat Tree) peut être défini par au moins une contrainte structurelle fonction des deux variables m et w (vecteurs de dimension égale à un), ainsi que par h, où ∀i ∈ 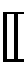 1,h 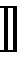 , chaque routeur Nᵢⱼ de niveau i est relié à m noeuds de service Nᵢ₋₁ⱼ du niveau inférieur i-1, et chaque routeur Nᵢ₋₁ⱼ de niveau i-1 est relié à w routeurs Nᵢⱼ du niveau supérieur i. Il peut donc être noté (h,m,w).

Un XGFT (Extended Generalized Fat Tree) peut être défini par au moins une contrainte structurelle fonction des deux variables m et w (vecteurs de dimension égale à h), ainsi que par h, où ∀i ∈ 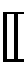 1,h 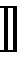 , mᵢ > 0 et wᵢ > 0. Il peut donc être noté (h,[m₁,m₂,...,mₕ],[w₁, w₂,...,wₕ]). Par ailleurs, il permet d'avoir des liaisons différentes (nombre de liaisons montantes/descendantes) pour les différents niveaux i de la structure en arbre.

Un PGFT (Parallel Generalized Fat Tree) est un XGFT auquel on ajoute le troisième vecteur p. Il peut donc être noté (h,[m₁, m₂,...,m_{h]},[w₁, w₂,...,wₕ],[p₁, p₂,...,pₕ]). Il permet d'introduire la notion de redondance de liens entre deux noeuds de service de deux niveaux voisins.

La première étape 10 se poursuit en choisissant au moins un paramètre de topologie parmi :
- un nombre maximal de ports des routeurs Nᵢⱼ (avec i ≥ 1),
- un nombre h de niveaux de routeurs Nᵢⱼ (avec i ≥ 1),
- un nombre de noeuds de service N₀ⱼ connectés à un routeur N₁ⱼ appartenant au premier niveau (i = 1),
- un nombre de routeurs Nᵢ₋₁ⱼ d'un niveau i-1 connectés à un même routeur Nᵢⱼ d'un niveau i,
- un nombre de routeurs Nᵢⱼ d'un niveau i connectés à un même noeud de service Nᵢ₋₁ⱼ d'un niveau i-1, et
- un nombre de liaisons (ou liens) entre un routeur Nᵢⱼ d'un niveau i et un noeud de service Nᵢ₋₁ⱼ d'un niveau i -1.

On notera que l'usager de l'équipement électronique EE peut choisir au moyen de l'interface homme/machine IH chaque paramètre de topologie parmi une liste de paramètres de topologie fournie par l'interface de programmation INP.

Cette liste peut, par exemple, être stockée dans des moyens de stockage MS du dispositif de traitement DT. Ces moyens de stockage MS peuvent, par exemple, se présenter sous la forme d'une mémoire, éventuellement de type logiciel.

L'invention propose donc de définir de façon non ambigüe la structure de chaque topologie d'interconnexion à partir d'une ou plusieurs contraintes structurelles (définies chacune en fonction d'au moins une variable), en raison de la régularité des topologies d'interconnexion théoriques. On notera que ces contraintes structurelles, et donc les structures des topologies d'interconnexion, peuvent même être exprimées sous forme d'équations mathématiques, comme indiqué ci-dessous.

A titre d'exemple pour les structures PGFT, chaque contrainte structurelle peut être choisie parmi les inéquations suivantes ∀i ∈ [1,h-1], où h est le nombre de niveaux de routeurs de la topologie d'interconnexion :
- pᵢ*mᵢ + pᵢ₊₁*Wᵢ₊₁ ≤ radixMax (cette contrainte structurelle permet de spécifier que le nombre de liaisons connectées à un routeur ne doit pas dépasser le nombre de ports disponibles sur ce routeur),
- pₕ*mₕ ≤ radixMax, et
- w₁*p₁ + noeudsParFeuille ≤ radixMax,
où radixMax est le nombre maximal de ports de chaque routeur Nᵢⱼ, et noeudsParFeuille est le nombre de noeuds de service N₀ⱼ connectés à un même routeur N₁ⱼ dit « feuille » du fait qu'il appartient au premier niveau.

Egalement à titre d'exemple pour les structures XGFT, chaque contrainte structurelle peut être choisie parmi les inéquations suivantes ∀i ∈ [1,h-1], où h est le nombre de niveaux de routeurs de la topologie d'interconnexion :
- mᵢ + wᵢ₊₁ ≤ radixMax,
- mₕ ≤ radixMax, et
- wi + noeudsParFeuille ≤ radixMax.

Egalement à titre d'exemple pour les structures GFT, chaque contrainte structurelle peut être choisie parmi les inéquations suivantes ∀i ∈ [1,h-1], où h est le nombre de niveaux de routeurs de la topologie d'interconnexion :
- m + w ≤ radixMax,
- m ≤ radixMax, et
- w + noeudsParFeuille ≤ radixMax.

Durant la deuxième étape (20) du procédé selon l'invention, on détermine au moyen d'un solveur (défini par les moyens de résolution MR) la topologie d'interconnexion optimale du système S, en fonction d'au moins chaque contrainte structurelle correspondante et chaque paramètre de topologie choisi dans la première étape (10) et d'au moins un critère d'optimisation choisi.

Le choix de chaque critère d'optimisation peut, par exemple être effectué par l'usager dans la première étape 10. En variante, il peut se faire dans la seconde étape 20. Ce choix peut se faire au moyen de l'interface homme/machine IH parmi une liste de critères d'optimisation fournie par l'interface de programmation INP. Cette liste peut, par exemple, être stockée dans les moyens de stockage MS du dispositif de traitement DT.

Grâce à la définition de la structure de chaque topologie d'interconnexion à partir d'au moins une contrainte structurelle fonction d'au moins une variable, on peut désormais déterminer la topologie d'interconnexion optimale d'un système S par résolution d'un problème d'optimisation au moyen d'un solveur (ou moyens de résolution MR). En d'autres termes, la séparation entre la modélisation de la structure et la méthode de résolution permet de déléguer la recherche de solutions optimales à un outil mathématique (ou solveur) fiable et robuste.

A titre d'exemple non limitatif, on peut utiliser le solveur appelé « Bonmin », lequel est capable de résoudre des systèmes d'équations non-linéaires à variables entières. Il permet de trouver des solutions précises en des temps réduits (typiquement quelques secondes pour des topologies de 64000 noeuds de service). En variante, on peut, par exemple, utiliser le solveur Ipopt.

Par exemple, chaque critère d'optimisation peut être choisi parmi au moins le coût du système S, le niveau de performance souhaité du système S (par exemple sa puissance de calcul ou sa rapidité de calcul), l'extensibilité du système S, la consommation d'énergie souhaitée du système S, des contraintes thermiques, notamment liées à l'environnement d'accueil du système S, et l'encombrement du système S (critère logistique). D'une manière générale un critère d'optimisation peut être n'importe quelle propriété d'une topologie d'interconnexion.

On notera que dans certaines situations l'utilisation des seules contraintes structurelles peut aboutir à une topologie d'interconnexion juste mais non utilisable dans la pratique. Par conséquent, dans la seconde étape 20, on peut déterminer la topologie d'interconnexion optimale en fonction également d'au moins une contrainte d'utilisation choisie.

Par exemple, chaque contrainte d'utilisation peut être choisie parmi au moins :
- une interdiction de connecter à un routeur Nᵢⱼ (avec i > 1) appartenant à un niveau i donné plus de liaisons (ou liens) vers le niveau supérieur à ce niveau donné que de liaisons (ou liens) vers le niveau inférieur à ce niveau donné (en effet les liaisons inférieures ne pourront pas générer suffisamment de trafic pour que toutes les liaisons supérieures soient utilisées). Avec les exemples de définition des variables m, w, p et h donnés plus haut, cette contrainte d'utilisation peut s'exprimer sous forme mathématique au moyen de l'inéquation wᵢ₊₁ ≤ mᵢ,
- une conservation d'une bande passante en entrée et en sortie de chaque routeur Nᵢⱼ (avec i > 1). Avec les exemples de définition des variables m, w, p et h donnés plus haut, cette contrainte d'utilisation peut s'exprimer sous forme mathématique au moyen de l'équation facteursMini = facteursMaxi = 1, où facteursMini et facteursMaxi sont des facteurs de blocage minimal et maximal pour le niveau i considéré (un facteur de blocage étant un rapport de nombres de noeuds de service entre un niveau supérieur à un niveau i donné et un niveau inférieur à ce niveau i donné). Par exemple, on peut utiliser les inéquations facteursMini ≤ pᵢ₊₁*wᵢ₊₁/pᵢ*mᵢ ≤ facteursMaxᵢ et facteursMin₁ ≤ p₁*w₁/noeudsParFeuille ≤ facteursMax₁. Dans ce cas, si on n'a que des composantes égales à 1 pour facteursMini et facteursMaxᵢ, on a 1 ≤ p₁*w₁/noeudsParFeuille ≤ 1 (pour le niveau 1, et la même chose pour les autres niveaux), et donc il y a conservation de la bande passante. En revanche, si on a par exemple pour le niveau 1 facteursMin₁ = 0,5 et facteursMax₁ =1, on autorise jusqu'à une liaison montante pour deux descendantes, et donc il n'y a pas conservation de la bande passante. On notera que l'on pourrait ici utiliser d'autres formules, comme par exemple facteursMinᵢ = 1 et facteursMaxi = 1 pour tous les i ou pᵢ₊₁ * wᵢ₊₁ = pᵢ * mᵢ,
- un nombre minimum de noeuds de service Nᵢⱼ. Avec les exemples de définition des variables m, h et noeudsParFeuille donnés plus haut, cette contrainte d'utilisation peut s'exprimer sous forme mathématique au moyen de l'inéquation noeudsParFeuille*Πmᵢ (de i = 1 à h) ≥ minNoeuds, où minNoeuds est le nombre de noeuds de service N₀ⱼ connectés à des routeurs feuilles N₁ⱼ du premier niveau (i = 1), et
- un nombre maximum de liaisons (ou liens) entre deux routeurs Nᵢⱼ. Cette contrainte d'utilisation permet d'éviter d'introduire une baisse de la tolérance aux pannes si un routeur est défectueux. Avec l'exemple de définition de la variable p donné plus haut, cette contrainte d'utilisation peut s'exprimer sous forme mathématique au moyen de l'inéquation 1 ≤ pᵢ ≤ maxRépétition, où maxRépétition est le nombre maximum de liaisons entre deux routeurs.

On notera qu'il est également possible d'utiliser des contraintes d'utilisation spécifiques pour écarter certains cas particuliers. C'est notamment le cas lorsque l'une des composantes du vecteur m et/ou l'une des composantes du vecteur w est égale à 1. En effet, dans ce cas il est possible de construire une structure PGFT similaire en supprimant un niveau (pour un prix inférieur et tout aussi résistant aux pannes). Dans ce cas, on peut utiliser une contrainte d'utilisation qui s'exprime sous forme mathématique au moyen des inéquations wᵢ₊₁ > 1 et mi > 1.

On notera également que l'usager de l'équipement électronique EE peut choisir au moyen de l'interface homme/machine IH chaque contrainte d'utilisation parmi une liste de contraintes d'utilisation fournie par l'interface de programmation INP. Cette liste peut, par exemple, être stockée dans les moyens de stockage MS du dispositif de traitement DT.

On a schématiquement illustré sur la figure 3 un exemple non limitatif de système S à structure PGFT définie par (h,m,w,p) = (2, [4,2], [2,2], [1,2]). On considère ici que chaque routeur a quatre ports disponibles. Un exemple de construction de ce système S est donné ci-dessous.

Pour la construction du premier niveau de routeurs N₁ⱼ, on utilise la valeur de mi. Dans cet exemple, m₁ vaut 4 et donc les routeurs N₂ⱼ du deuxième niveau seront reliés à quatre routeurs feuilles N₁ⱼ différents du premier niveau. Puis, on utilise la valeur de wi. Dans cet exemple, w₁ vaut 2 et donc chaque routeur feuille N₁ⱼ du premier niveau est relié à deux routeurs N₂ⱼ du deuxième niveau. Puis, on utilise la valeur de pi. Dans cet exemple, pi vaut 1 et donc on utilise une unique liaison (non redondante) entre les premier et deuxième niveaux. On appelle ci-après ilot de niveau 1 un groupe comprenant quatre routeurs N₁ⱼ (j = 1 à 4) du premier niveau et deux routeurs N₂ⱼ (j = 1 à 2) du deuxième niveau. Dans cet exemple, le système comprend deux ilots de niveau 1.

Ensuite, on utilise la valeur de m₂. Dans cet exemple, m₂ vaut 2 et donc les routeurs N₃ⱼ du troisième niveau seront reliés à deux routeurs N₂ⱼ de deux ilots différents du niveau 2. Puis, on utilise la valeur de w₂. Dans cet exemple, w₂ vaut 2 et donc chaque routeur N₂ⱼ du deuxième niveau sera relié à deux routeurs N₃ⱼ différents appartenant au troisième niveau (et plus précisément à des ilots de niveau 2 différents). Chaque ilot de niveau 1 ayant deux routeurs N₂ⱼ du deuxième niveau, on a donc deux routeurs N₃ⱼ dans chaque îlot de niveau 2.

Ensuite, on complète les liaisons manquantes entre les deuxième et troisième niveaux, puis, la valeur de p₂ étant égale à 2, on double chaque liaison entre routeurs des deuxième et troisième niveaux. Enfin, dans le cas d'un supercalculateur S on ajoute des noeuds de calcul N₀ⱼ en les connectant aux routeurs N₁ⱼ du premier niveau. Ici, la liaison entre chaque noeud de calcul N₀ⱼ et le routeur N₁ⱼ correspondant est simple pour ne pas dépasser le nombre de ports disponibles sur ce routeur N₁ⱼ.

Cette méthode de construction peut être mise en oeuvre par le solveur (ou moyens de résolution MR) pour le système S de la figure 3, avec toutes les contraintes structurelles et toutes les contraintes d'utilisation décrites plus haut, mais également avec le coût du système S comme critère d'optimisation.

L'invention ne se limite pas aux modes de réalisation de procédé de détermination, de dispositif de traitement, et d'équipement électronique décrits ci-avant, seulement à titre d'exemple, mais elle englobe toutes les variantes que pourra envisager l'homme de l'art dans le seul cadre des revendications ci-après.

## Revendications

1. Procédé de détermination d'une topologie d'interconnexion optimale d'un système (S) comprenant des noeuds de service (Nᵢⱼ) interconnectés entre eux via des liaisons et constituant pour certains des routeurs ayant des ports et appartenant à au moins un niveau, **caractérisé en ce qu'**il comprend une première étape (10) dans laquelle on choisit une structure pour une topologie d'interconnexion optimale à déterminer parmi un ensemble de structures définies chacune par au moins une contrainte structurelle, puis on choisit au moins un paramètre de topologie parmi un nombre maximal de ports des routeurs, un nombre de niveaux de routeurs, un nombre de noeuds de service (Nᵢⱼ) connectés à un routeur appartenant au premier niveau et ci-après dit « routeur feuille », un nombre de noeuds de service d'un niveau i-1 connectés à un même routeur d'un niveau i, un nombre de routeurs d'un niveau i connectés à un même noeud de service d'un niveau i-1, un nombre de liaisons entre un routeur d'un niveau i et un noeud de service (Nᵢ₋₁ⱼ) d'un niveau i -1, et une seconde étape (20) dans laquelle on détermine au moyen d'un solveur ladite topologie d'interconnexion optimale en fonction d'au moins chaque contrainte structurelle correspondante et chaque paramètre de topologie choisi et d'au moins un critère d'optimisation choisi.

2. Procédé selon la revendication 1, **caractérisé en ce que** chaque critère d'optimisation est choisi dans un groupe comprenant un coût dudit système (S), un niveau de performance dudit système (S), une extensibilité dudit système (S), une consommation d'énergie dudit système (S), des contraintes thermiques, et un encombrement dudit système (S).

3. Procédé selon l'une des revendications 1 et 2, **caractérisé en ce que** chaque contrainte structurelle est choisie dans un groupe d'inéquations comprenant pᵢ*mᵢ + pᵢ₊₁*Wᵢ₊₁ ≤ radixMax, pₕ*mₕ ≤ radixMax, et w₁*p₁ + noeudsParFeuille ≤ radixMax, où mi est le nombre de noeuds de service d'un niveau i-1 connectés à un même routeur d'un niveau i, wᵢ est le nombre de routeurs d'un niveau i connectés à un même noeud de service d'un niveau i-1, pi est le nombre de liaisons entre un routeur d'un niveau i et un noeud de service (Nᵢ₋₁ⱼ) d'un niveau i -1, radixMax est le nombre maximal de ports de chaque routeur, h est le nombre de niveaux de routeurs, et noeudsParFeuille est le nombre de noeuds de service (N₀ⱼ) connectés à un même routeur (N₁ⱼ) appartenant audit premier niveau.

4. Procédé selon l'une des revendications 1 à 3, **caractérisé en ce que** dans ladite seconde étape (20) on détermine ladite topologie d'interconnexion optimale en fonction également d'au moins une contrainte d'utilisation choisie.

5. Procédé selon la revendication 4, **caractérisé en ce que** chaque contrainte d'utilisation est choisie dans un groupe comprenant une interdiction de connecter à un routeur appartenant à un niveau i donné plus de liaisons vers le niveau supérieur audit niveau donné que de liaisons vers le niveau inférieur audit niveau donné, une conservation d'une bande passante en entrée et en sortie de chaque routeur, une non conservation d'une bande passante en entrée et en sortie de chaque routeur, un nombre minimum de noeuds de service (Nᵢⱼ), un nombre maximum de liaisons entre deux routeurs.

6. Procédé selon l'une des revendications 1 à 5, **caractérisé en ce que** ledit système (S) est choisi dans un groupe comprenant un supercalculateur et un centre de données.

7. Produit programme d'ordinateur comprenant un jeu d'instructions qui, lorsqu'il est exécuté par des moyens de traitement, est propre à mettre en oeuvre le procédé selon l'une des revendications précédentes pour déterminer une topologie d'interconnexion optimale d'un système (S) comprenant des noeuds de service (Nᵢⱼ) interconnectés entre eux via des liaisons et constituant pour certains des routeurs ayant des ports et appartenant à au moins un niveau.

8. Dispositif de traitement (DT) pour déterminer une topologie d'interconnexion optimale d'un système (S) comprenant des noeuds de service (Nᵢⱼ) interconnectés entre eux via des liaisons et constituant pour certains des routeurs ayant des ports et appartenant à au moins un niveau, et propre à équiper un équipement électronique (EE) comprenant des ressources de calcul (RC) et une interface homme/machine (IH), **caractérisé en ce qu'**il comprend i) une interface de programmation (INP) agencée pour permettre à un usager de choisir via ladite interface homme/machine (IH) une structure pour une topologie d'interconnexion optimale à déterminer parmi un ensemble de structures définies chacune par au moins une contrainte structurelle, et au moins un paramètre de topologie choisi parmi un nombre maximal de ports des routeurs, un nombre de niveaux de routeurs, un nombre de noeuds de service (Nᵢⱼ) connectés à un routeur appartenant au premier niveau, un nombre de noeuds de service d'un niveau i-1 connectés à un même routeur d'un niveau i, un nombre de routeurs d'un niveau i connectés à un même noeud de service d'un niveau i-1, un nombre de liaisons entre un routeur d'un niveau i et un noeud de service (Nᵢ₋₁ⱼ) d'un niveau i -1, et ii) des moyens de résolution (MR) agencés pour déterminer ladite topologie d'interconnexion optimale en fonction d'au moins chaque contrainte structurelle correspondante et chaque paramètre de topologie choisi et d'au moins un critère d'optimisation choisi.

9. Equipement électronique (EE) comprenant des ressources de calcul (RC) et une interface homme/machine (IH), **caractérisé en ce qu'**il comprend en outre un dispositif de traitement (DT) selon la revendication 8.

## Patentansprüche

1. Bestimmungsverfahren einer optimalen Vernetzungstopologie eines Systems (S), umfassend Serviceknoten (Nᵢⱼ), die untereinander über Verbindungen vernetzt sind und wobei einige von ihnen Router mit Ports bilden, die wenigstens zu einer Ebene gehören, **dadurch gekennzeichnet, dass** es einen ersten Schritt (10) umfasst, bei dem eine Struktur für eine optimale Vernetzungsstruktur gewählt ist, die aus einer Gruppe von Strukturen, die jeweils durch wenigstens eine strukturelle Vorgabe definiert sind, zu bestimmen ist, dann wird wenigstens ein Topologieparameter aus einer maximalen Anzahl von Ports der Router, eine Routerebenenanzahl, eine Anzahl der Serviceknoten (Nᵢⱼ), die an einen Router angeschlossen sind, der zur ersten Ebene gehört und nachstehend als "Blatt-Router" bezeichnet wird, eine Anzahl von Serviceknoten einer Ebene i-1, die an einen und denselben Router 1 einer Ebene i angeschlossen sind, eine Anzahl von Routern einer Ebene i, die an einen und denselben Serviceknoten einer Ebene i-1 angeschlossen sind, eine Anzahl von Verbindungen zwischen einem Router einer Ebene i und einem Serviceknoten (Ni-ij) einer Ebene i-1 gewählt, und einen zweiten Schritt (20), in dem mittels eines Solvers die genannte optimale Vernetzungstopologie in Abhängigkeit von wenigstens jeder entsprechenden strukturellen Vorgabe und jedem ausgewählten Topologieparameter und wenigstens ein ausgewähltes Optimierungskriterium bestimmt wird.

2. Verfahren gemäß Anspruch 1, **dadurch gekennzeichnet, dass** jedes Optimierungskriterium aus einer Gruppe ausgewählt ist, umfassend die Kosten des genannten Systems (S), ein Leistungsniveau des genannten Systems (S), eine Ausbaufähigkeit des genannten Systems (S), einen Energieverbrauch des genannten Systems (S), thermische Vorgaben und einen Platzverbrauch des genannten Systems (S).

3. Verfahren gemäß irgendeinem der Ansprüche 1 und 2, **dadurch gekennzeichnet, dass** jede strukturelle Vorgabe aus einer Gruppe von Ungleichungen ausgewählt ist, umfassend pᵢ*mᵢ + pᵢ₊₁*Wᵢ₊₁ ≤ radixMax, pₕ*mₕ ≤ radixMax und w₁*p₁ + KnotenProBlatt> ≤ radixMax, wobei mᵢ die Anzahl der Serviceknoten einer Ebene i-1 ist, die an einen und denselben Router einer Ebene i angeschlossen sind, wᵢ die Anzahl der Router einer Ebene i sind; die an einen und denselben Serviceknoten einer Ebene i-1 angeschlossen sind, ₚᵢ die Anzahl der Verbindungen zwischen einem Router einer Ebene i und einem Serviceknoten (Nᵢ₋₁ⱼ) einer Ebene i-1 ist, radixMax die maximale Anzahl von Ports jedes Routers ist, h die Routerebenenanzahl ist und KnotenProBlatt die Anzahl der Serviceknoten (Nₒⱼ) ist, die an einen und demselben Router (N₁ⱼ) angeschlossen sind, die zu dem genannten ersten Niveau gehören.

4. Verfahren gemäß irgendeinem der Ansprüche 1 bis 3, **dadurch gekennzeichnet, dass** in dem genannten zweiten Schritt (20) die genannte optimale Vernetzungstopologie in Abhängigkeit ebenfalls von einer gewählten Nutzungsvorgabe gewählt wird.

5. Verfahren gemäß Anspruch 4, **dadurch gekennzeichnet, dass** jede Nutzungsvorgabe aus einer Gruppe ausgewählt ist, umfassend ein Verbot, an einen Router, der zu einer bestimmten Ebene i gehört, mehr Verbindungen an die Ebene, die höher ist als die genannte Ebene, als an Verbindungen an die untere Ebene als die bestimmte Ebene, eine Erhaltung einer Bandbreite am Eingang und am Ausgang jedes Routers, eine Nicht-Erhaltung einer Bandbreite am Eingang und am Ausgang jedes Routers, eine Mindestanzahl von Serviceknoten (Nij), eine maximale Anzahl von Verbindungen zwischen zwei Routern anzuschließen.

6. Verfahren gemäß einem der Ansprüche 1 bis 5, **dadurch gekennzeichnet, dass** das genannte System (S) aus einer Gruppe ausgewählt ist, umfassend einen Superrechner und ein Datenzentrum.

7. Computerprogrammprodukt, umfassend einen Anweisungssatz, der, wenn er durch Bearbeitungsmittel ausgeführt wird, geeignet ist, um das Verfahren gemäß einem der voranstehenden Ansprüche umzusetzen, um eine optimale Vernetzungstopologie eines Systems (S) zu bestimmen, das Serviceknoten (Nᵢⱼ) umfasst, die miteinander über Verbindungen vernetzt sind und bei einigen Router mit Ports bilden, die wenigstens zu einer Ebene gehören.

8. Verarbeitungsvorrichtung (DT) zur Bestimmung einer optimalen Vernetzungstopologie (S), umfassend Serviceknoten (Nij), die miteinander über Verbindungen vernetzt sind und bei einigen Router mit Ports bilden und zu wenigstens einer Eben gehören und geeignet sind, eine elektronische Ausrüstung (EE) auszurüsten, die Berechnungsressourcen (RC), und eine Schnittstelle Mensch/Maschine (IH) umfasst, **dadurch gekennzeichnet, dass** sie umfasst i) eine Programmierschnittstelle (INP), die angeordnet ist, um einem Nutzer die Wahl einer Struktur für eine optimale Vernetzungstopologie, die aus einer Gruppe von Strukturen zu bestimmen ist, die jeweils durch wenigstens eine strukturelle Vorgabe und wenigstens einen Topologieparameter, der aus einer maximalen Anzahl von Routerports ausgewählt ist, eine Anzahl von Routerebenen, eine Anzahl von Serviceknoten (Nᵢⱼ), die an einen Router angeschlossen sind, der zu ersten Ebene gehört, eine Anzahl von Serviceknoten einer Ebene i-1, die an einen und denselben Router einer Ebene i angeschlossen sind, eine Anzahl von Routern einer Ebene i, die an einen und denselben Serviceknoten einer Ebene i-1 angeschlossen sind, eine Anzahl von Verbindungen zwischen einem Router einer Ebene i und einem Servicerouter (Nᵢ₋₁ⱼ) einer Ebene i-1 über die genannte Schnittstelle Mensch / Maschine (IH) zu ermöglichen und ii) Auflösungsmittel (MR), die angeordnet sind, um die genannte optimale Vernetzungstopologie in Abhängigkeit von wenigstens jeder entsprechenden strukturellen Vorgabe und jeden ausgewählten Topologieparameter und wenigstens ein ausgewähltes Optimierungskriterium zu bestimmen.

9. Elektronische Ausrüstung (EE), umfassend Berechnungsressourcen (RC) und eine Schnittstelle Mensch / Maschine (IH), **dadurch gekennzeichnet, dass** sie darüber hinaus eine Verarbeitungsvorrichtung (DT) gemäß Anspruch 8 umfasst.

## Claims

1. Method for determining an optimal interconnection topology of a system (S) including service nodes (Nᵢⱼ) interconnected using links some of which are routers with ports, and belonging to at least one level, **characterised in that** it includes at least one step (10) in which a structure is chosen for an optimal interconnection topology to be determined from among a set of structures each defined by at least one structural constraint, and at least one topology parameter is then chosen from among a maximum number of ports of the routers, a number of levels of routers, a number of service nodes (Nᵢⱼ) connected to a router belonging to the first level and called hereinafter a "leaf router", a number of service nodes of a level i-1 connected to a given router of a level i, a number of routers of a level i connected to a given service node of a level i-1, a number of links between a router of a level i and a service node (Nᵢ₋₁ⱼ) of a level i -1, and a second step (20) in which one determines by means of a solver the said optimal interconnection topology defined by at least one corresponding structural constraint and each chosen topology parameter and at least one chosen optimisation criterion.

2. Method according to claim 1, **characterised in that** each optimisation criterion is chosen from a group including the cost of the said system (S), a level of performance of the said system (S), the extensibility of the said system (S), the energy consumption of the said system (S), thermal constraints, and the encumbrance of the said system (S).

3. Method according to one of claims 1 and 2, **characterised in that** each structural constraint is chosen from a group of inequalities including pᵢ*mᵢ + pᵢ₊₁*wᵢ₊₁ ≥ radixMax, pₕ*mₕ ≥ radixMax, and w₁*p₁ + noeudsParFeuille ≥ radixMax, where mi is the number of service nodes of a level i-1 connected to given router of a level i, wi is the number of routers of a level i connected to given service node of a level i-1, pi is the number of links between a router of a level i and a service node (Nᵢ₋₁ⱼ) of a level i - 1, radixMax is the maximum number of ports of each router, h is the number of levels of routers, and noeudsParFeuille is the number of service nodes (N₀ⱼ) connected to a given router (N₁ⱼ) belonging to the said first level.

4. Method according to one of claims 1 to 3, **characterised in that** in the said second step (20) the said optimal interconnection topology is also determined in terms of at least one chosen usage constraint.

5. Method according to claim 4, **characterised in that** each usage constraint is chosen from a group including a prohibition against connecting to a router belonging to a given level i more links to the level above the said given level than links to the level below this said given level, conservation of an input and output bandwidth of each router, non-conservation of an input and output bandwidth of each router, a minimum number of service nodes (Nᵢⱼ), and a maximum number of links between two routers.

6. Method according to one of claims 1 to 5, **characterised in that** the said system (S) is chosen from a group including a supercomputer and a data centre.

7. Computer program product including a set of instructions which, when it is executed by processing means, is able to implement a method according to one of the previous claims to determine an optimal interconnection topology of a system (S) including service nodes (Nᵢⱼ) which are interconnected using links, and some of which are routers with ports, and belonging to at least one level.

8. Processing device (DT) for determining an optimal interconnection topology of a system (S) including service nodes (Nᵢⱼ) interconnected using links some of which are routers with ports, and belonging to at least one level, and able to be fitted to an electronic device (EE) including computational resources (RC) and a man-machine interface (IH), **characterised in that** it includes i) a programming interface (INP) designed to enable a user to choose via the said man-machine interface (IH) a structure for an optimal interconnection topology is chosen, to be determined from among a set of structures each one of which is defined by at least one structural constraint, and at least one topology parameter chosen from among a maximum number of router ports, a number of levels of routers, a number of service nodes (Nᵢⱼ) connected to a router belonging to the first level, a number of service nodes of a level i-1 connected to the same router of a level i, a number of routers of a level i connected to the same service node of a level i-1, a number of links between a router of a level i and a service node (Nᵢ₋₁ⱼ) of a level i -1, and ii) resolution means (MR) designed to determine the said optimal interconnection topology defined by at least each corresponding structural constraint, and each chosen topology parameter, and by at least one chosen optimisation criterion.

9. Electronic device (EE) including computational resources (RC) and a man-machine interface (IH), **characterised in that** it also includes a processing device (DT) according to claim 8.
